# EUROPÄISCHE PATENTSCHRIFT

(11) **EP 4 288 798 B1**
(45) Veröffentlichungstag und Bekanntmachung des Hinweises auf die Patenterteilung: **15.10.2025**
(21) Anmeldenummer: 22703577.1
(22) Anmeldetag: 26.01.2022
(51) Int. Cl.: G01S 7/497, G01S 17/931, G01S 7/481

(54) **DETEKTIONSVORRICHTUNG ZU ÜBERWACHUNG WENIGSTENS EINES ÜBERWACHUNGSBEREICHS, FAHRZEUG MIT WENIGSTENS EINER DETEKTIONSVORRICHTUNG UND VERFAHREN ZUM BETREIBEN EINER PRÜFEINRICHTUNG EINER DETEKTIONSVORRICHTUNG**
DETECTION DEVICE FOR MONITORING AT LEAST ONE MONITORING REGION, VEHICLE COMPRISING AT LEAST ONE DETECTION DEVICE, AND METHOD FOR OPERATING A TESTING DEVICE OF A DETECTION DEVICE
DISPOSITIF DE DÉTECTION POUR SURVEILLANCE D'AU MOINS UNE RÉGION DE SURVEILLANCE, VÉHICULE COMPRENANT AU MOINS UN DISPOSITIF DE DÉTECTION, ET PROCÉDÉ DE FONCTIONNEMENT D'UN DISPOSITIF DE TEST D'UN DISPOSITIF DE DÉTECTION

(30) Priorität: 02.02.2021 DE 102021102302
(43) Veröffentlichungstag der Anmeldung: 13.12.2023
(73) Patentinhaber: Valeo Schalter und Sensoren GmbH, 74321 Bietigheim-Bissingen (DE)
(72) Erfinder: PARL, Christoph, 74321 Bietigheim-Bissingen (DE); LOGINENKO, Oleg, 74321 Bietigheim-Bissingen (DE)
(74) Vertreter: Pothmann, Karsten
(86) Internationale Anmeldenummer: PCT/EP2022/051673
(87) Internationale Veröffentlichungsnummer: WO 2022/167272

(56) Entgegenhaltungen:
- US-A1- 2005 205 764
- US-A9- 2021 018 880

## Beschreibung

### Technisches Gebiet

Die Erfindung betrifft eine Detektionsvorrichtung zur Überwachung wenigstens eines Überwachungsbereichs mittels Abtastsignalen,
mit wenigstens einer Sendeeinrichtung zum Senden von Abtastsignalen und mit wenigstens einer Prüfeinrichtung zur Prüfung eines Funktionszustands wenigstens eines zu prüfenden Bauteils der Detektionsvorrichtung, welches bei einem Betrieb der Detektionsvorrichtung Abtastsignalen ausgesetzt ist, und zur Erzeugung wenigstens eines Warnsignals bei einer Abweichung eines Ist-Funktionszustands des zu prüfenden Bauteils von einem Referenz-Funktionszustand.

Ferner betrifft die Erfindung ein Fahrzeug mit wenigstens einer Detektionsvorrichtung zur Überwachung wenigstens eines Überwachungsbereichs mittels Abtastsignalen, wobei die wenigstens eine Detektionsvorrichtung aufweist
wenigstens eine Sendeeinrichtung zum Senden von Abtastsignalen und wenigstens eine Prüfeinrichtung zur Prüfung eines Funktionszustands wenigstens eines zu prüfenden Bauteils der Detektionsvorrichtung, welches bei einem Betrieb der Detektionsvorrichtung Abtastsignalen ausgesetzt ist, und zur Erzeugung wenigstens eines Warnsignals bei einer Abweichung eines Ist-Funktionszustands des zu prüfenden Bauteils von einem Referenz-Funktionszustand.

Außerdem betrifft die Erfindung ein Verfahren zum Betreiben einer Prüfeinrichtung einer Detektionsvorrichtung, wobei die Detektionsvorrichtung zur Überwachung wenigstens eines Überwachungsbereichs mittels Abtastsignalen vorgesehen ist, wobei bei dem Verfahren ein Funktionszustand wenigstens eines zu prüfenden Bauteils der Detektionsvorrichtung, welches bei einem Betrieb der Detektionsvorrichtung Abtastsignalen ausgesetzt wird, geprüft wird und bei Erkennen eines von einem Referenz-Funktionszustand des wenigstens einen zu prüfenden Bauteils abweichenden Ist-Funktionszustand wenigstens ein Warnsignal erzeugt wird.

### Stand der Technik

Aus der DE 10 2017 109 138 A1 ist eine optische Erfassungseinrichtung für ein Kraftfahrzeug bekannt, mit einem Gehäuse der optischen Erfassungseinrichtung, in welchem eine Lichtquelleneinheit der optischen Erfassungseinrichtung angeordnet ist, wobei mittels der Lichtquelleneinheit Lichtstrahlen durch ein Gehäuseteil des Gehäuses in eine Umgebung des Kraftfahrzeugs aussendbar sind, wobei die optische Erfassungseinrichtung eine Überprüfungseinheit aufweist, mittels welcher ein Funktionszustand des Gehäuses prüfbar ist, und bei einem Erkennen eines von einem Referenz-Funktionszustand des Gehäuses abweichenden Ist-Funktionszustand des Gehäuses ein Steuersignal erzeugbar ist.

Aus der US 2005/0205764 A1 ist eine gattungsgemäße Detektionsvorrichtung mit einem Licht-sender sowie einem -empfänger bekannt, die in einem Gehäuse angeordnet sind. Innerhalb des Gehäuses ist ein Sensor als ein erstes Prüfmittel angeordnet, um Temperatur, Feuchtig-keit oder den Druck innerhalb des Gehäuses zu messen. Anhand einer Änderung diese Parameter kann eine Beschädigung des Gehäuses erkannt werden. Zusätzlich kann an der Außenseite des Gehäuses ein weiterer Sensor als zweites Prüfmittel angeordnet sein, um die entsprechenden Parameter außerhalb des Gehäuses zu messen. Eine Beschädigung des Gehäuses kann dann durch Vergleich der Änderungsraten von Innen- und Außenparametern erkannt werden.

Ferner sind aus der US 2021/00188890 ein optisch kontrollierbares, insbesondere elektrochromatisches Gebäudefenster und eine zugehörige Sicherheitseinrichtung für Gebäude bekannt. Dabei wird vorgeschlagen, Beschädigungen von Fenstern durch Messung der elektrischen Eigenschaften der elektrochromatischen Beschichtung zu erkennen.

Der Erfindung liegt die Aufgabe zugrunde, eine Detektionsvorrichtung, ein Fahrzeug und ein Verfahren der eingangs genannten Art zu gestalten, bei denen ein Funktionszustand wenigstens eines Bauteils der Detektionsvorrichtung, welches bei einem Betrieb der Detektionsvorrichtung Abtastsignalen ausgesetzt ist, einfacher und/oder zuverlässiger geprüft werden kann.

### Offenbarung der Erfindung

Diese Aufgabe wird erfindungsgemäß bei der Detektionsvorrichtung dadurch gelöst, dass die wenigstens eine Prüfeinrichtung
wenigstens zwei elektrisch leitfähige Prüfelemente aufweist, zwischen denen wenigstens ein Teil des wenigstens einen zu prüfenden Bauteils angeordnet ist,
wobei die wenigstens zwei Prüfelemente nicht elektrisch leitfähig miteinander verbunden sind,
die wenigstens zwei Prüfelemente jeweils mit wenigstens einem Prüf-Auswertemittel elektrisch verbunden sind, mit welchem wenigstens ein elektrisches Prüfsignal an die wenigstens zwei Prüfelemente angelegt werden kann und wenigstens eine Ist-Zustandsgröße, welche einen Ist-Funktionszustand des wenigstens einen zu prüfenden Bauteils charakterisiert, aus wenigstens einer elektrischen Wechselwirkung zwischen den wenigstens zwei Prüfelementen ermittelt werden kann,
und die Detektionsvorrichtung wenigstens ein Mittel aufweist, mit dem bei einer Abweichung wenigstens einer Ist-Zustandsgröße von wenigstens einer vorgegebenen Referenz-Zustandsgröße, welche einen Referenz-Funktionszustand des wenigstens einen zu prüfenden Bauteils charakterisiert, unter Berücksichtigung einer Toleranz wenigstens
ein Warnsignal erzeugt werden kann.

Erfindungsgemäß sind das wenigstens eine zu prüfende Bauteil und/oder wenigstens eines der wenigstens zwei Prüfelemente so angeordnet, dass Veränderungen des wenigstens einen zu prüfenden Bauteils die elektrische Wechselwirkung zwischen den wenigstens zwei Prüfelementen beeinflussen.

Wenigstens ein Teil wenigstens eines zu prüfenden Bauteils ist zwischen wenigstens zwei elektrisch leitfähigen Prüfelementen angeordnet. Mit wenigstens einem Prüf-Auswertemittel kann wenigstens ein elektrisches Prüfsignal an die wenigstens zwei Prüfelemente angelegt werden. Die wenigstens zwei Prüfelemente sind nicht elektrisch leitfähig miteinander verbunden, sodass sich als Wechselwirkung zwischen den wenigstens zwei Prüfelementen ein elektrisches Feld ausbilden kann. Das elektrische Feld ist charakteristisch für die Anordnung der wenigstens zwei Prüfelemente und dem dazwischenliegenden Teil des wenigstens einen zu prüfenden Bauteils. Eine an den wenigstens zwei Prüfelementen abgegriffene elektrische Spannung und/oder ein Frequenzverhalten der elektrischen Spannung kann vorteilhafterweise als wenigstens eine Ist-Zustandsgröße, welche einen Ist-Funktionszustand des wenigstens einen zu prüfenden Bauteils charakterisiert, ermittelt werden. Bei einer Veränderung der Anordnung, insbesondere bei einer Formveränderung wenigstens eines der Prüfelemente und/oder des Teils des wenigstens einen zu prüfenden Bauteils oder beim Fehlen eines Teils der Prüfelemente und/oder eines Teils des wenigstens einen zu prüfenden Bauteils, verändert sich das elektrische Feld und damit auch die wenigstens eine Ist-Zustandsgröße.

Mit wenigstens einem Mittel der Detektionsvorrichtung kann die wenigstens eine Ist-Zustandsgröße unter Berücksichtigung einer Toleranz mit wenigstens einer vorgegebenen Referenz-Zustandsgröße verglichen werden. Die Referenz-Zustandsgröße charakterisiert einen vorgegebenen Referenz-Funktionszustand des wenigstens einen zu prüfenden Bauteils. Der Referenz-Funktionszustand ist der Zustand, in dem das wenigstens eine zu prüfende Bauteil Vorgaben, insbesondere bezüglich einer Augensicherheit, entsprechend funktionsfähig ist. Abhängig von der Ergebnis des Vergleichs kann wenigstens ein Warnsignal erzeugt werden.

Auf das Warnsignal hin können Funktionen der Detektionsvorrichtung, insbesondere das Senden von Abtastsignalen, beeinflusst, insbesondere gestoppt, wird.

Für den Vergleich der wenigstens einen Ist-Zustandsgröße mit wenigstens einer Referenz-Zustandsgröße können vorteilhafterweise elektronische Schwellwert-Vergleiche eingesetzt werden. Der Vergleich kann auf softwaremäßigem und/oder hardwaremäßigem Wege realisiert werden.

Die Toleranz bei dem Vergleich der wenigstens eine Ist-Zustandsgröße mit wenigstens einer Referenz-Zustandsgröße kann vorgegeben werden. Die Toleranz kann auch Null oder nahezu Null sein.

Die wenigstens eine Referenz-Zustandsgröße kann vorteilhafterweise vorab, insbesondere bei einer Kalibration der Detektionsvorrichtung, beispielsweise am Ende einer Produktionslinie der Detektionsvorrichtung, ermittelt werden. Referenz-Zustandsgrößen können vorteilhafterweise in entsprechenden Speichermitteln vorgehalten werden. Alternativ können Referenz-Zustandsgrößen auch durch Vorgabe und/oder Einstellung von entsprechenden insbesondere elektrischen/elektronischen Bauteilen eingestellt werden.

Ein Funktionszustand des wenigstens einen zu prüfenden Bauteils kann insbesondere durch Beschädigung oder Fehlen von Teilen des wenigstens einen zu prüfenden Bauteils beeinflusst werden. Derartige Beschädigungen können insbesondere tiefe Kratzer in Oberflächen, Risse oder Brüche, Löcher, insbesondere hervorgerufen durch Steinschlag oder dergleichen, oder ein vollständiges oder teilweises Fehlen des wenigstens einen zu prüfenden Bauteils sein. Insbesondere beim Einsatz im Außenbereich, insbesondere an der Außenseite eines Fahrzeugs, kann die Detektionsvorrichtung rauen Einsatzbedingungen ausgesetzt sein, sodass ein erhöhtes Risiko für Beschädigungen entsteht.

Derartige Beschädigungen können zu Funktionsbeeinträchtigung des wenigstens einen zu prüfenden Bauteils führen. Abhängig von dem Einsatzbereich der Detektionsvorrichtung können Funktionsbeeinträchtigungen des wenigstens einen zu prüfenden Bauteils zu Gesundheitsschädigungen von Personen im Umfeld der Detektionsvorrichtung, zu Beschädigungen von Bauteilen der Detektionsvorrichtung und/oder zur Beschädigung von Bauteilen im Umfeld der Detektionsvorrichtung durch sich unkontrolliert ausbreitende Abtastsignale führen.

Insbesondere kann eine Funktionsbeeinträchtigung eines Transmissions-Gehäuseabschnitts, durch welchen in funktionsfähigen Zustand Abtastsignale kontrolliert gelangen können, dazu führen, dass mit wenigstens einer Sendeeinrichtung der Detektionsvorrichtung gesendete elektromagnetische Abtastsignale, insbesondere Laserstrahlen, unkontrolliert in die Umgebung gelangen und so die Augensicherheit von Personen gefährden können. Mithilfe der erfindungsgemäßen Prüfeinrichtung kann die Augensicherheit der Detektionsvorrichtung erhöht werden.

Vorteilhafterweise kann mit der Erfindung der Funktionszustand wenigstens eines prüfenden Bauteils während des laufenden Betriebs der Detektionsvorrichtung geprüft werden. Im Falle einer Veränderung des Funktionszustands insbesondere infolge einer Beschädigung kann die Detektionsvorrichtung oder Teile der Detektionsvorrichtung innerhalb sehr kurzer Zeit abgeschaltet werden.

Vorteilhafterweise kann auf ein Warnsignal wenigstens einer Prüfeinrichtung hin eine Spannungsversorgung einer Steuerung der wenigstens einen Sendeeinrichtung abgeschaltet oder das Auslösen von Abtastsignalen gestoppt werden.

Vorteilhafterweise kann die Detektionsvorrichtung mittels elektromagnetischer Abtastsignale, insbesondere Lichtsignale, im Besonderen Lasersignale, wenigstens einen Überwachungsbereich überwachen. Auf diese Weise kann der wenigstens eine Überwachungsbereich berührungslos überwacht werden.

Vorteilhafterweise kann die Detektionsvorrichtung ausgestaltet sein zur Durchführung eines Signal-Laufzeitverfahrens. Derartige Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden.

Vorteilhafterweise kann die Detektionsvorrichtung ausgestaltet sein zur Ermittlung von Informationen über Objekte in einem Überwachungsbereich, insbesondere Entfernungen, Geschwindigkeiten und/oder Richtungen von Objekten relativ zur Detektionsvorrichtung und/oder wenigstens einem Bezugsbereich der Detektionsvorrichtung oder eines die Detektionsvorrichtungen tragenden Trägers, insbesondere eines Fahrzeugs, einer Maschine oder dergleichen.

Vorteilhafterweise kann die Detektionsvorrichtung als sogenanntes Flash-System, insbesondere als Flash-LiDAR, ausgestaltet sein. Dabei können entsprechende Abtastsignale gleichzeitig einen größeren Teil eines Überwachungsbereichs oder den gesamten Überwachungsbereich anstrahlen. Alternativ kann die Detektionsvorrichtung als scannendes System ausgestaltet sein. Dabei kann mit Abtastsignalen ein Überwachungsbereich abgetastet, also abgescannt, werden. Dazu können die Ausbreitungsrichtungen der Abtastsignale variiert, insbesondere über den Überwachungsbereich geschwenkt, werden.

Vorteilhafterweise kann die Detektionsvorrichtung als laserbasiertes Entfernungsmesssystem ausgestaltet sein. Ein laserbasiertes Entfernungsmesssystem kann als Lichtquelle wenigstens einer Sendeeinrichtung wenigstens einen Laser, insbesondere einen Diodenlaser, aufweisen. Mit dem wenigstens einen Laser können insbesondere gepulste Abtastsignale gesendet werden. Mit dem Laser können Abtastsignale in für das menschliche Auge sichtbaren oder nicht sichtbaren Wellenlängenbereichen emittiert werden. Entsprechend kann wenigstens eine Empfangseinrichtung der Detektionsvorrichtung einen für die Wellenlänge des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann wenigstens ein Teil der Funktionen des Fahrzeugs oder der Maschine autonom oder teilautonom ausgeführt werden.

Mit der Detektionsvorrichtung können stehende oder bewegte Objekte, insbesondere Fahrzeuge, Personen, Gesten, Bewegungen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei einer vorteilhaften Ausführungsform kann die Detektionsvorrichtung wenigstens ein elektrisches Prüfsignal-Erzeugungsmittel aufweisen. Auf diese Weise können elektrische Prüfsignale erzeugt werden, welche an die wenigstens zwei Prüfelemente angelegt werden können.

Vorteilhafterweise können mit dem wenigstens einen elektrischen Prüfsignal-Erzeugungsmittel elektrische Wechsel-Prüfsignale erzeugt werden. Mit elektrischen Wechsel-Prüfsignalen können elektrische Wechselfelder zwischen den wenigstens zwei Prüfelementen erzeugt werden. Das Frequenzverhalten der Wechselfelder kann mit dem wenigstens einen Prüf-Auswertemittel ermittelt werden und als Ist-Zustandsgröße verwendet werden.

Bei einer weiteren vorteilhaften Ausführungsform kann wenigstens der Teil wenigstens eines zu prüfenden Bauteils, welcher sich zwischen den wenigstens zwei elektrisch leitfähigen Prüfelemente befindet, elektrisch nicht oder gering leitfähig sein. Auf diese Weise kann sich eine elektrische Spannung zwischen den wenigstens zwei Prüfelementen aufbauen.

Die dielektrischen Eigenschaften des wenigstens einen Teils des wenigstens einen zu prüfenden Bauteils können sich mit dessen Beschaffenheit, insbesondere dessen Form, verändern. Die Veränderung der optischen Eigenschaften des wenigstens einen Teils kann die elektrische Wechselwirkung zwischen den wenigstens zwei elektrisch leitfähigen Prüfelementen verändern. Auf diese Weise kann eine Veränderung der Beschaffenheit des zu prüfenden Bauteils über die elektrische Wechselwirkung zwischen den wenigstens zwei Prüfelemente erfasst werden.

Vorteilhafterweise kann wenigstens der Teil wenigstens eines zu prüfenden Bauteils, welcher sich zwischen den wenigstens zwei elektrisch leitfähigen Prüfelementen befindet, aus Kunststoff und/oder Glas sein. Auf diese Weise kann eine elektrische Isolation zwischen den wenigstens zwei Prüfelementen realisiert werden.

Vorteilhafterweise kann wenigstens ein Prüf-Auswertemittel und/oder wenigstens ein Mittel zur Erzeugung wenigstens eines Warnsignals bei einer Abweichung wenigstens einer Ist-Zustandsgröße von wenigstens einer Referenz-Zustandsgröße auf softwaremäßigem und/oder hardwaremäßigem Wege realisiert sein.

Vorteilhafterweise kann wenigstens ein Prüf-Auswertemittel und/oder wenigstens ein Mittel zur Erzeugung wenigstens eines Warnsignals bei einer Abweichung von Ist-Zustandsgrößen von Referenz-Zustandsgrößen wenigstens teilweise mit einer Steuer- und Auswerteeinrichtung der Detektionsvorrichtung realisiert sein. Auf diese Weise können in der Detektionsvorrichtung ohnehin vorhandene Mittel verwendet werden.

Bei einer weiteren vorteilhaften Ausführungsform kann die Detektionsvorrichtung wenigstens ein Gehäuse aufweisen, in dem wenigstens eine Sendeeinrichtung und/oder wenigstens eine Empfangseinrichtung und/oder wenigstens ein Teil wenigstens einer Prüfeinrichtung angeordnet ist und/oder wenigstens ein Gehäuse der Detektionsvorrichtung kann wenigstens einen Transmissions-Gehäuseabschnitt zur Transmission von Abtastsignalen aufweisen. In einem Gehäuse können Bauteile, insbesondere wenigstens eine Sendeeinrichtung und/oder wenigstens eine Empfangseinrichtung und/oder wenigstens ein Teil wenigstens einer Prüfeinrichtung, zur Umgebung hin geschützt werden.

Durch wenigstens einen Transmissions-Gehäuseabschnitt können Abtastsignale von wenigstens einer Sendeeinrichtung aus dem Gehäuse in den wenigstens einen Überwachungsbereich und/oder reflektierte Abtastsignale aus dem wenigstens einen Uberwachungsbereich in das Gehäuse zu wenigstens einer Empfangseinrichtung gelangen.

Bei einer weiteren vorteilhaften Ausführungsform kann wenigstens ein zu prüfendes Bauteil ein Gehäuseabschnitt und/oder ein Transmissions-Gehäuseabschnitt eines Gehäuses und/oder ein optisches Bauteil sein. Mit Gehäuseabschnitten kann verhindert werden, dass sich Abtastsignale unkontrolliert ausbreiten.

Vorteilhafterweise kann wenigstens ein zu prüfender Gehäuseabschnitt das Innere des Gehäuses und der Umgebung trennen. Durch einen Transmissions-Gehäuseabschnitt können Abtastsignale kontrolliert insbesondere in den Überwachungsbereich abgegeben werden. Bei einer Beschädigung des Gehäuseabschnitts, insbesondere eines Transmissions-Gehäuseabschnitts, können Abtastsignale unkontrolliert in die Umgebung gelangen. Unkontrolliert austretendes Licht kann zu Gesundheitsschädigungen bei Personen, insbesondere zu Schädigungen von Augen, führen. Mittels der Prüfeinrichtung kann der Funktionszustand des wenigstens einen Gehäuseabschnitts, insbesondere wenigstens eines Transmissions-Gehäuseabschnitts, geprüft werden. Bei erkennen einer Veränderung des Funktionszustands, welche auf eine Beschädigung des wenigstens einen Gehäuseabschnitts, insbesondere des wenigstens einen Transmissions-Gehäuseabschnitts, hindeutet, kann die Detektionsvorrichtung, insbesondere die wenigstens eine Sendeeinrichtung, entsprechend angesteuert, insbesondere abgeschaltet, werden. So kann die Augensicherheit der Detektionsvorrichtung insgesamt erhöht werden.

Alternativ oder zusätzlich kann vorteilhafterweise wenigstens ein zu prüfender Gehäuseabschnitt Bereiche im Innenraum des Gehäuses, insbesondere einen Bereich mit wenigstens einer Sendeeinrichtung und einen Bereich mit wenigstens einer Empfangseinrichtung, voneinander trennen. Auf diese Weise ein Übertritt von Abtastsignalen zwischen der wenigstens eine Sendeeinrichtung der wenigstens eine Empfangseinrichtung vermieden werden.

Vorteilhafterweise kann wenigstens ein zu prüfendes Bauteil ein optisches Bauteil sein. Optische Bauteile können Eigenschaften von optischen Abtastsignalen beeinflussen.

Optische Bauteile können für optische Abtastsignale, insbesondere Lichtsignale, durchlässige optische Bauteile, insbesondere optische Fenster, Transmissions-Gehäuseabschnitte oder dergleichen, und/oder optische Abtastsignale beeinflussende Bauteile, insbesondere optische Linsen, Umlenkeinrichtungen, im Besonderen Spiegel, oder dergleichen, sein.

Weicht der Ist-Funktionszustand der optischen Bauteile von ihrem Referenz-Funktionszustand ab, können die optischen Abtastsignale in einer für die Funktion der Detektionsvorrichtung negativer Weise beeinflusst werden. So können, falls eine Funktionsstörung eines optischen Fensters vorliegt, optische Abtastsignale unkontrolliert in die Umgebung gelangen und dort zu Schäden, insbesondere zu Gesundheitsschäden bei Personen, führen.

Bei einer weiteren vorteilhaften Ausführungsform kann wenigstens eine Anordnung mit wenigstens zwei elektrisch leitfähigen Prüfelementen und einem dazwischen liegenden Teil wenigstens eines zu prüfenden Bauteils wenigstens teilweise für Abtastsignale durchlässig sein. Auf diese Weise kann mit der wenigstens einen Anordnung ein Transmissionsabschnitt, insbesondere ein Fenster, für Abtastsignale realisiert werden. Die Abtastsignale können dabei sowohl durch die wenigstens zwei elektrisch leitfähigen Prüfelemente, als auch durch den dazwischen liegenden Teil des wenigstens einen zu prüfenden Bauteils gelangen. Auf diese Weise können die Prüfelemente in einem Ausbreitungsweg der Abtastsignale angeordnet werden.

Bei einer weiteren vorteilhaften Ausführungsform kann wenigstens ein elektrisch leitfähiges Prüfelement aus einem für Abtastsignale durchlässigen Material sein und/oder Lücken aufweisen, durch welche Abtastsignale hindurchgelangen können. Auf diese Weise kann eine Beeinträchtigung der Ausbreitung von Abtastsignalen durch das wenigstens eine elektrisch leitfähige Prüfelement verringert werden. So kann das wenigstens eine leitfähige Prüfelement in einem Ausbreitungsweg der Abtastsignale angeordnet werden

Vorteilhafterweise kann wenigstens ein elektrisch leitfähiges Prüfelement aus einem für Abtastsignale durchlässigen Material sein. Auf diese Weise können Abtastsignale direkt durch das wenigstens eine Prüfelemente hindurchgelangen.

Zusätzlich oder alternativ kann vorteilhafterweise wenigstens ein elektrisch leitfähiges Prüfelement linienförmig, streifenförmig, bahnförmig, gitterförmig, rasterförmig oder dergleichen realisiert sein. Auf diese Weise können Lücken realisiert werden, welche für Abtastsignale durchlässig sind. So kann das Transmissionsverhalten für Abtastsignale verbessert werden.

Bei einer weiteren vorteilhaften Ausführungsform kann wenigstens ein elektrisch leitfähiges Prüfelement Abtastsignale beeinflussende Eigenschaften aufweisen. Auf diese Weise können mit dem wenigstens einen elektrisch leitfähigen Prüfelement zusätzliche Funktionen realisiert werden. So kann insgesamt ein Bauteilaufwand bei der Detektionsvorrichtung verringert werden. Alternativ oder zusätzlich kann wenigstens ein Teil eines ohnehin vorhandenen Bauteils der Detektionsvorrichtung zusätzlich als elektrisch leitfähiges Prüfelement verwendet werden.

Vorteilhafterweise kann wenigstens ein elektrisch leitfähiges Prüfelement Eigenschaften zur Strahlformung, Beugung, Streuung, Fokussierung, Aufweitung oder dergleichen von Abtastsignalen, insbesondere elektromagnetischen Abtastsignalen, im Besonderen optischen Abtastsignalen, aufweisen.

Bei einer weiteren vorteilhaften Ausführungsform kann wenigstens ein elektrisch leitfähiges Prüfelement an einer breiten Seite wenigstens eines zu prüfenden Bauteils angeordnet sein
und/oder
wenigstens ein elektrisch leitfähiges Prüfelementen an einer Seite wenigstens eines zu prüfenden Bauteils angeordnet sein, welches beim Betrieb der Detektionsvorrichtung Abtastsignalen ausgesetzt ist,
   und/oder
wenigstens ein elektrisch leitfähiges Prüfelement an einer schmalen Seite wenigstens eines zu prüfenden Bauteils angeordnet sein
   und/oder
wenigstens ein elektrisch leitfähiges Prüfelementen an einer Seite wenigstens eines zu prüfenden Bauteils angeordnet sein, welches beim Betrieb der Detektionsvorrichtung Abtastsignalen nicht ausgesetzt ist. Auf diese Weise kann die Position des wenigstens einen elektrisch leitfähigen Prüfelements an die Form und/oder die Funktion und/oder die Position des wenigstens einen zu prüfenden Bauteils angepasst werden.

An einer breiten Seite des wenigstens einen zu prüfenden Bauteils kann das wenigstens eine Prüfelement eine größere Fläche abdecken. So kann bezüglich der elektrischen Wechselwirkung ein besseres Signal-Rausch-Verhältnis erreicht werden.

An einer Seite, welche Abtastsignalen ausgesetzt ist, kann mit dem wenigstens einen Prüfelement effizient die Funktionsfähigkeit in Bezug auf die Wirkung des zu prüfenden Bauteils auf die Abtastsignale geprüft werden.

An einer schmalen Seite des wenigstens einen zu prüfenden Bauteils, insbesondere eines optischen Bauteils, kann das wenigstens eine Prüfelement platzsparend angeordnet sein.

An einer Seite, welche Abtastsignale nicht ausgesetzt ist, kann ein Einfluss des wenigstens einen Prüfelements auf die Wirkung des zu prüfenden Bauteils auf die Abtastsignale, insbesondere Transmissionsfähigkeit, verringert werden. So können die Anforderungen insbesondere an die Transmissionseigenschaften des wenigstens einen Prüfelements verringert werden.

Vorteilhafterweise kann sich wenigstens ein elektrisch leitfähiges Prüfelement über mehrere Seiten erstrecken. Auf diese Weise kann die Anordnung des wenigstens einen elektrisch leitfähigen Prüfelements individuell an das wenigstens einen zu prüfende Bauteil angepasst werden.

Bei einer weiteren vorteilhaften Ausführungsform kann wenigstens ein elektrisch leitfähiges Prüfelement mechanisch kraftübertragend mit dem wenigstens einen zu prüfenden Bauteil verbunden sein. Auf diese Weise können Zustandsänderungen, insbesondere Verformungen, besser übertragen werden.

Bei einer weiteren vorteilhaften Ausführungsform kann wenigstens ein elektrisch leitfähiges Prüfelement als elektrisch leitende Beschichtung auf einer Oberfläche des wenigstens einen zu prüfenden Bauteils realisiert sein. Auf diese Weise können einfach flächige und/oder gering auftragende elektrisch leitfähige Prüfelemente realisiert werden.

Vorteilhafterweise kann wenigstens ein elektrisch leitfähiges Prüfelement aus Indiumzinnoxid bestehen. Auf diese Weise kann ein für Licht transparentes und elektrisch leitfähiges Prüfelement realisiert werden. Indiumzinnoxid wird im englischsprachigen als indium tin oxide (ITO) bezeichnet. Indiumzinnoxid kann als Beschichtung des wenigstens einen zu prüfenden Bauteils verwendet werden. So kann das elektrisch leitfähige Prüfelemente in einem Transmissionsbereich des wenigstens einen zu prüfenden Bauteils angeordnet werden.

Bei einer weiteren vorteilhaften Ausführungsform kann wenigstens ein elektrisch leitfähiges Prüfelement an einer dem wenigstens einen zu prüfenden Bauteil abgewandten Außenseite mit einer Schutzschicht versehen sein. Auf diese Weise kann das wenigstens eine Prüfelement besser vor Umgebungseinflüssen, insbesondere Steinschlag oder dergleichen, geschützt werden.

Bei einer weiteren vorteilhaften Ausführungsform kann wenigstens eine Sendeeinrichtung zur Aussendung von elektromagnetischen Abtastsignalen ausgestaltet sein
und/oder
die Detektionsvorrichtung wenigstens eine Empfangseinrichtung aufweisen.

Mit der wenigstens einen Sendeeinrichtung können elektromagnetische Abtastsignale gesendet werden. Hierzu kann die wenigstens eine Sendeeinrichtung wenigstens eine Signalquelle aufweisen. Mit elektromagnetischen Abtastsignalen können Objekte berührungslos erfasst werden.

Mit wenigstens einer Empfangseinrichtung können an Objekten reflektierte elektromagnetische Abtastsignale empfangen werden. Gegebenenfalls können empfangene elektromagnetische Abtastsignale mit der wenigstens einen Empfangseinrichtung in Empfangssignale, insbesondere elektrische Empfangssignale, umgewandelt werden. Die insbesondere elektrischen Empfangssignale können mit einer Auswerteeinrichtung, insbesondere einer elektrischen Auswerteeinrichtung, verarbeitet werden. Vorteilhafterweise können die elektromagnetischen Abtastsignale Lichtsignale, insbesondere Lasersignale, aufweisen oder daraus bestehen. Lichtsignale können technisch einfach mit einer entsprechenden Signalquelle, insbesondere Lichtquelle, realisiert und mit entsprechenden Detektoren empfangen werden.

Vorteilhafterweise kann die Detektionsvorrichtung wenigstens eine Auswerteeinrichtung aufweisen. Mit einer Auswerteeinrichtung können aus den gesendeten und/oder empfangenen Abtastsignalen, insbesondere aus elektrischen Sendesignalen, aus denen die gesendeten Abtastsignale erzeugt werden, und/oder elektrischen Empfangssignalen, welche aus den empfangenen Abtastsignalen erzeugt werden, Informationen über den Überwachungsbereich, insbesondere Entfernungen, Geschwindigkeiten und/oder Richtungen von Objekten relativ zur Detektionsvorrichtung, ermittelt werden.

Vorteilhafterweise kann die wenigstens eine Auswerteeinrichtung eine kombinierte Steuer- und Auswerteeinrichtung sein. Mit einer Steuer- und Auswerteeinrichtung können Komponenten der Detektionsvorrichtung gesteuert werden und Signale verarbeitet werden.

Ferner wird die Aufgabe erfindungsgemäß bei dem Fahrzeug dadurch gelöst, dass die wenigstens eine Prüfeinrichtung
wenigstens zwei elektrisch leitfähige Prüfelemente aufweist, zwischen denen wenigstens ein Teil des wenigstens einen zu prüfenden Bauteils angeordnet ist,
wobei die wenigstens zwei Prüfelemente nicht elektrisch leitfähig miteinander verbunden sind,
die wenigstens zwei Prüfelemente jeweils mit wenigstens einem Prüf-Auswertemittel elektrisch verbunden sind, mit welchem wenigstens ein elektrisches Prüfsignal an die wenigstens zwei Prüfelemente angelegt werden kann und wenigstens eine Ist-Zustandsgröße, welche einen Ist-Funktionszustand des wenigstens einen zu prüfenden Bauteils charakterisiert, aus wenigstens einer elektrischen Wechselwirkung zwischen den wenigstens zwei Prüfelementen ermittelt werden kann,
und die Detektionsvorrichtung wenigstens ein Mittel aufweist, mit dem bei einer Abweichung wenigstens einer Ist-Zustandsgröße von wenigstens einer vorgegebenen Referenz-Zustandsgröße, welche einen Referenz-Funktionszustand des wenigstens einen zu prüfenden Bauteils charakterisiert, unter Berücksichtigung einer Toleranz wenigstens ein Warnsignal erzeugt werden kann.

Vorteilhafterweise kann das Fahrzeug wenigstens ein Fahrassistenzsystem aufweisen. Mit einem Fahrerassistenzsystem können Funktionen des Fahrzeugs autonom oder wenigstens teilweise autonom ausgeführt werden.

Vorteilhafterweise kann wenigstens eine Detektionsvorrichtung mit wenigstens einem Fahrerassistenzsystem verbunden sein. Auf diese Weise können Informationen, welche mit der wenigstens einen Detektionsvorrichtung, insbesondere Informationen über Objekte in einem Überwachungsbereich, ermittelt werden, an das wenigstens eine Fahrerassistenzsystem übermittelt werden. Die Informationen der wenigstens eine Detektionsvorrichtung können mit dem wenigstens ein Fahrerassistenzsystem zum autonomen oder teilweise autonomen Ausführen von Funktionen des Fahrzeugs verwendet werden.

Außerdem wird die Aufgabe erfindungsgemäß bei dem Verfahren dadurch gelöst, dass wenigstens ein elektrisches Prüfsignal an wenigstens zwei elektrisch leitfähige Prüfelemente angelegt wird, zwischen denen wenigstens ein Teil des wenigstens einen zu prüfenden Bauteils angeordnet ist,
wenigstens eine Ist-Zustandsgröße, welche einen Ist-Funktionszustand des wenigstens einen zu prüfenden Bauteils charakterisiert, aus wenigstens einer elektrischen Wechselwirkung zwischen den wenigstens zwei Prüfelementen ermittelt wird,
bei einer Abweichung wenigstens einer Ist-Zustandsgröße von wenigstens einer vorgegebenen Referenz-Zustandsgröße, welche einen Referenz-Funktionszustand des wenigstens einen zu prüfenden Bauteils charakterisiert, unter Berücksichtigung einer Toleranz wenigstens ein Warnsignal erzeugt wird.

Erfindungsgemäß wird wenigstens ein Prüfsignal an wenigstens zwei elektrisch leitende Prüfelemente angelegt. Zwischen den wenigstens zwei elektrisch leitenden Prüfelementen ist wenigstens ein Teil wenigstens eines zu prüfenden Bauteils angeordnet. Aus wenigstens einer elektrischen Wechselwirkung zwischen den wenigstens zwei elektrisch leitenden Prüfelementen wird eine Ist-Zustandsgröße ermittelt. Die elektrische Wechselwirkung und die Ist-Zustandsgröße sind abhängig von einem Ist-Funktionszustand des wenigstens einen zu prüfenden Bauteils. Weicht der Ist-Funktionszustand des wenigstens einen zu prüfenden Bauteils von einem Referenz-Funktionszustand ab, so wird davon ausgegangen, dass das wenigstens eine zu prüfende Bauteils seine Funktion nicht fehlerfrei erfüllen kann.

Der Referenz-Funktionszustand wird durch eine vorgegebene Referenz-Zustandsgröße charakterisiert. Bei einer Abweichung der wenigstens einen Ist-Zustandsgröße von der wenigstens einen Referenz-Zustandsgröße wird unter Berücksichtigung einer Toleranz, welche auch Null sein kann, wenigstens ein Warnsignal erzeugt.

Auf das Warnsignal hin kann eine Aussendung von Abtastsignalen verringert, insbesondere gestoppt, werden. So kann mit dem erfindungsgemäßen Verfahren die Funktionssicherheit, insbesondere die Augensicherheit, der Detektionsvorrichtung verbessert werden.

Vorteilhafterweise kann das Verfahren auf softwaremäßigem und/oder hardwaremäßigem Wege insbesondere mit Mitteln der Detektionsvorrichtung realisiert werden.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Es zeigen schematisch
- Figur 1: eine Vorderansicht eines Fahrzeugs mit einem Fahrerassistenzsystem und einem LiDAR-System zu Überwachung eines Überwachungsbereichs in Fahrtrichtung vor dem Fahrzeug;
- Figur 2: einen Schnitt eines LiDAR-Systems, welches in dem Fahrzeug aus Figur 1 verwendet werden kann, mit einer Prüfeinrichtung gemäß einem ersten Ausführungsbeispiel;
- Figur 3: eine Vorderansicht eines Fensters des LiDAR-Systems aus der Figur 2 mit flächigen Prüfelementen der Prüfeinrichtung, wobei die Prüfelemente an gegenüberliegenden breiten Seiten des Fensters angeordnet sind;
- Figur 4: einen Schnitt des Fensters aus der Figur 3 in einem funktionsfähigen Referenz-Funktionszustand;
- Figur 5: einen Schnitt des Fensters aus den Figuren 3 und 4 in einem Ist-Funktionszustand, indem das Fenster beschädigt ist;
- Figur 6: eine Vorderansicht eines Fensters mit gitterförmigen Prüfelementen einer Prüfeinrichtung gemäß einem zweiten Ausführungsbeispiel, welche bei dem LiDAR-System aus den Figuren 1 bis 3 eingesetzt werden kann;
- Figur 7: eine Vorderansicht eines Fensters mit flächigen Prüfelementen einer Prüfeinrichtung gemäß am dritten Ausführungsbeispiel, welche bei dem LiDAR-System aus den Figuren 1 bis 3 eingesetzt werden kann, wobei die Prüfelemente an gegenüberliegenden schmalen Seiten des Fensters angeordnet sind.

In den Figuren sind gleiche Bauteile mit gleichen Bezugszeichen versehen.

### Ausführungsform(en) der Erfindung

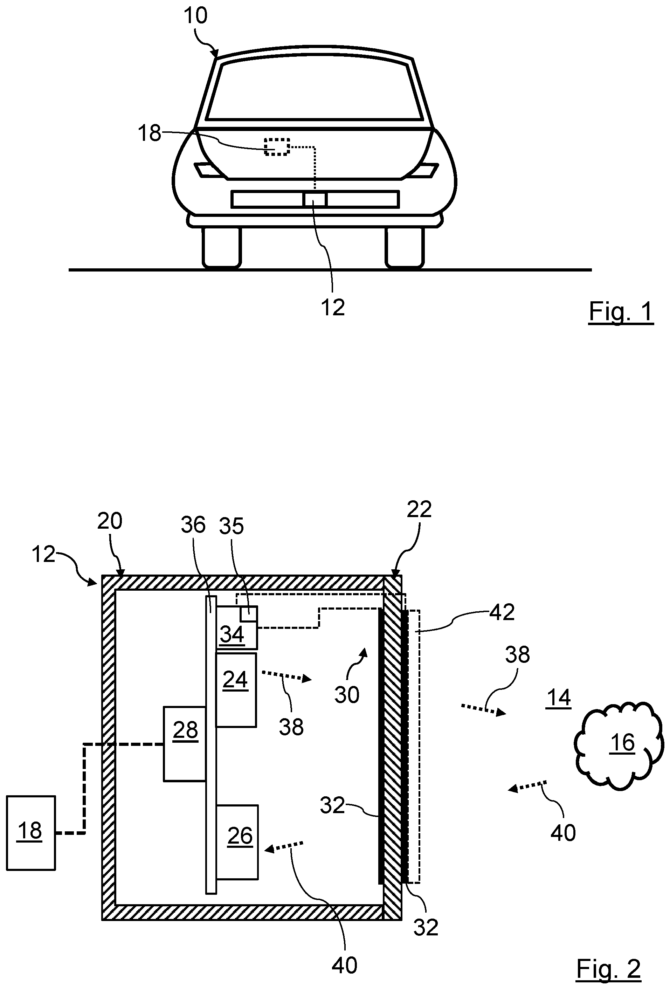

In der Figur 1 ist ein Fahrzeug 10 in Form eines Personenkraftwagens in der Vorderansicht gezeigt. Das Fahrzeug 10 verfügt über eine Detektionsvorrichtung in Form eines LiDAR-Systems 12. Das LiDAR-System 12 ist in der Figur 2 schematisch in einem Schnitt gezeigt. Das LiDAR-System 12 befindet sich beispielhaft in der vorderen Stoßstange des Fahrzeugs 10. Mit dem LiDAR-System 12 kann ein Überwachungsbereich 14 beispielhaft in Fahrtrichtung vor dem Fahrzeug 10 auf Objekte 16 hin überwacht werden. Das LiDAR-System 12 kann auch an anderer Stelle und anders ausgerichtet am Fahrzeug 10 angeordnet sein. Das Fahrzeug 10 kann auch mehrere LiDAR-Systeme 12 aufweisen.

Ferner verfügt das Fahrzeug 10 über ein Fahrerassistenzsystem 18. Mit dem Fahrerassistenzsystem 18 können Funktionen des Fahrzeugs 10 autonom oder teilautonom ausgeführt werden. Das LiDAR-System 12 ist mit dem Fahrerassistenzsystem 18 verbunden. Auf diese Weise können mit dem LiDAR-System 12 ermittelte Informationen über den Überwachungsbereich 14, beispielsweise Informationen über Objekte 16 im Überwachungsbereich 14, an das Fahrerassistenzsystem 18 übermittelt werden und mit diesem für die Ausführung von Funktionen des Fahrzeugs 10 verwendet werden.

Mit dem LiDAR-System 12 können Objektinformationen, beispielsweise Entfernungen, Richtungen und/oder Geschwindigkeiten von erfassten Objekten 16 relativ zum LiDAR-System 12 oder relativ zu einem Bezugsbereich des Fahrzeugs 10, beispielsweise relativ zu einer Fahrzeuglängsachse und/oder einer Fahrzeugquerachse des Fahrzeugs 10, ermittelt werden.

Mit dem LiDAR-System 12 können stehende oder bewegte Objekte, beispielsweise Fahrzeuge, Personen, Gesten, Bewegungen, Tiere, Pflanzen, Hindernisse, Fahrbahnunebenheiten, beispielsweise Schlaglöcher oder Steine, Fahrbahnbegrenzungen, Verkehrszeichen, Freiräume, insbesondere Parklücken, Niederschlag oder dergleichen, erfasst werden.

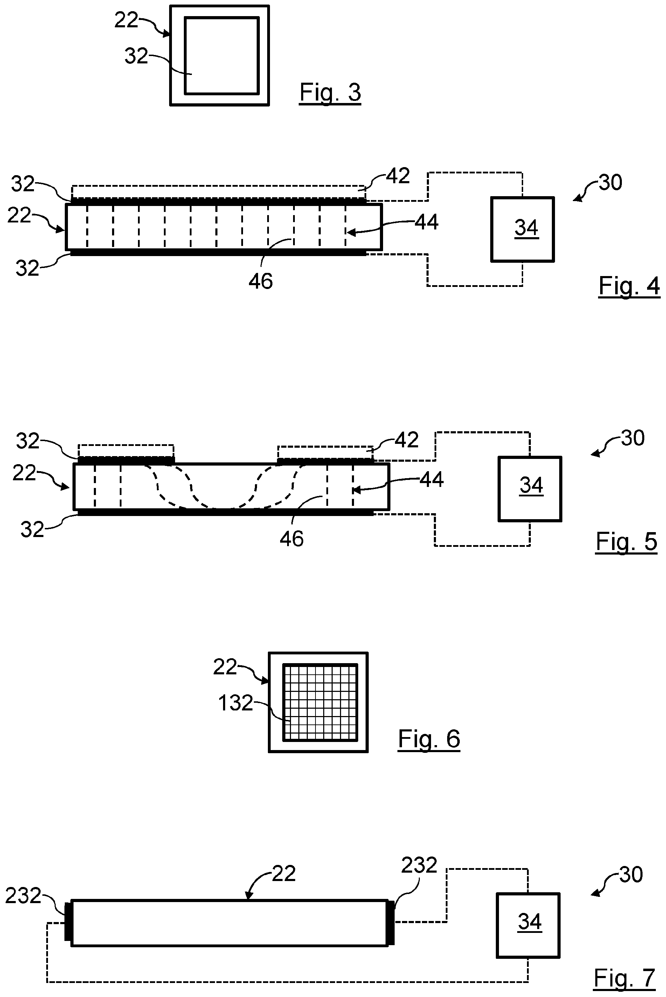

Das LiDAR-System 12 umfasst ein Gehäuse 20. Das Gehäuse 20 weist auf einer Seite, welche im Betriebszustand dem Überwachungsbereich 14 zugewandt wird, einen Transmissions-Gehäuseabschnitt in Form eines Fensters 22 auf. Das Fenster 22 ist in der Figur 3 in der Vorderansicht von dem Überwachungsbereich 14 aus betrachtet gezeigt.

In dem Gehäuse 20 sind eine Sendeeinrichtung 24, eine Empfangseinrichtung 26 und eine elektronische Steuer- und Auswerteeinrichtung 28 angeordnet.

Ferner umfasst das LiDAR-System 12 eine Prüfeinrichtung 30. Mit der Prüfeinrichtung 30 kann ein Funktionszustand des Fensters 22 geprüft werden. Die Prüfeinrichtung 30 umfasst zwei elektrisch leitfähige Prüfelemente 32 und eine Prüf-Auswerteeinrichtung 34. Die Prüf-Auswerteeinrichtung 34 ist in dem Gehäuse 20 angeordnet. Die Prüfelemente 32 befinden sich an dem Fenster 22.

Die Sendeeinrichtung 24, die Empfangseinrichtung 26, die Steuer- und Auswerteeinrichtung 28 und die Prüf-Auswerteeinrichtung 34 sind beispielhaft an einem gemeinsamen Träger, beispielhaft einer Leiterplatte 36, angeordnet. Die Sendeeinrichtung 24, die Empfangseinrichtung 26, die Steuer- und Auswerteeinrichtung 28 und die Prüf-Auswerteeinrichtung 34 können auch an unterschiedlichen Trägern, auch dezentral angeordnet sein. Die Prüf-Auswerteeinrichtung 34 kann auch wenigstens teilweise in der Steuer- und Auswerteeinrichtung 28 oder mit separaten Bauteilen realisiert sein.

Mit der Sendeeinrichtung 24 werden elektromagnetische Abtastsignale 38 durch das Fenster 22 in den Überwachungsbereich 14 gesendet. Die Sendeeinrichtung 24 weist eine Lichtquelle beispielhaft in Form eines Lasers auf. Mit dem Laser können elektromagnetische Abtastsignale 38 in Form von Laserlichtpulsen erzeugt werden. Die Sendeeinrichtung 24 kann ferner Lichtbeeinflussungseinrichtungen, beispielsweise optische Linsen, optische Umlenkeinrichtungen oder dergleichen aufweisen, mit denen die Abtastsignale 38 geformt und/oder gelenkt werden können.

Beispielhaft ist das LiDAR-System 12 als sogenanntes Flash-LiDAR-System ausgestaltet. Die Abtastsignale 38 werden dabei als Blitze (Flash) ausgesendet, welche den Überwachungsbereich 14 gleichzeitig anstrahlen. Alternativ kann das LiDAR-System 12 auch als scannendes System ausgestaltet sein, bei dem die Richtungen, in denen die Abtastsignale 38 in den Überwachungsbereich 14 gesendet werden, variiert werden.

Das Fenster 22 ist für die Abtastsignale 38 und entsprechende Echo-Abtastsignale 40 durchlässig. Die Prüfelemente 32 sind ebenfalls für die Abtastsignale 38 und die Echo-Abtastsignale 40 durchlässig.

Die Abtastsignale 38, welche auf ein Objekt 16 treffen, werden von diesem als elektromagnetische Echo-Abtastsignale 40 reflektiert. Die Echo-Abtastsignale 40, welche in Richtung des LiDAR-Systems 12 reflektiert werden, gelangen durch das Fenster 22 zu der Empfangseinrichtung 26.

Die Empfangseinrichtung 26 umfasst beispielhaft einen Detektor, mit dem die empfangenen Echo-Abtastsignale 40 in elektrische Signale umgewandelt werden können. Ferner kann die Empfangseinrichtung 26 optional optische Bauteile umfassen, mit denen die Echo-Abtastsignale 40 beeinflusst, beispielsweise auf den wenigstens einen Detektor fokussiert werden können.

Der Detektor der Empfangseinrichtung 26 ist beispielhaft ein für die Wellenlänge des mit der Sendeeinrichtung 24 ausgesendeten Lichtes ausgelegter Detektor, insbesondere ein Punktsensor, Zeilensensor oder Flächensensor, im Besonderen eine (Lawinen)fotodiode, eine Photodiodenzeile, ein CCD-Sensor, ein Active-Pixel-Sensor, beispielsweise CMOS-Sensor oder dergleichen. Die Empfangseinrichtung 26 kann auch mehrere Detektoren aufweisen.

Aus den elektrischen Signalen, welche mit der Empfangseinrichtung 26 aus den Echo-Abtastsignalen 40 ermittelt werden, werden beispielsweise nach einem Signal-Laufzeitverfahren die Entfernung, die Geschwindigkeit und/oder die Richtung des erfassten Objekts 16 relativ zum LiDAR-System 12 ermittelt.

Die Prüfelemente 32 sind beispielhaft jeweils als flächige Beschichtungen auf den gegenüberliegenden breiten Oberflächen des Fensters 22, durch welche auch die Abtastsignale 38 und die Echo-Abtastsignale 40 gelangen, realisiert. Die Prüfelemente 32 sind aus optisch transparentem und elektrisch leitfähigem Material, beispielsweise aus Indiumzinnoxid. Die beiden Prüfelemente 32 sind nicht elektrisch leitfähig miteinander verbunden.

Das Prüfelement 32 auf der dem Überwachungsbereich 14 zugewandten Außenseite des Fensters 22 kann darüber hinaus mit einer optionalen Schutzschicht 42 versehen sein. Die Schutzschicht 42 ist aus für die Abtastsignale 38 und die Echo-Abtastsignale 40 durchlässigem Material.

Das Fenster 22 ist zwischen den Prüfelementen 32 angeordnet. Das Fenster 22 ist aus einem für die Abtastsignale 38 und die Echo-Abtastsignale 40 durchlässigen und nicht elektrisch leitfähigen Material, beispielsweise aus Glas oder Kunststoff.

Jedes Prüfelement 32 ist mit der Prüf-Auswerteeinrichtung 34 elektrisch verbunden. Die Prüf-Auswerteeinrichtung 34 weist ein Prüfsignal-Erzeugungsmittel 35 auf, mit dem Prüfsignale beispielsweise in Form von Wechselspannungen an die beiden Prüfelemente 32 angelegt werden können.

Durch die elektrische Wechselwirkung zwischen dem Prüfelementen 32 wird auf die Prüfsignale hin ein elektrisches Feld 44 erzeugt. In den Figuren 4 und 5 sind modellhaft zur Erläuterung Feldlinien 46 eines elektrischen Feldes 44 angedeutet. Das elektrische Feld 44 ist charakteristisch für die Anordnung der Prüfelemente 32 mit dem Fenster 22. Das elektrische Feld 44 hängt außerdem von der Permittivität ε des Fensters 22 ab.

In der Figur 4 ist die Anordnung der Prüfelemente 32 mit dem Fenster 22 in einem Referenz-Funktionszustand gezeigt. In dem Referenz-Funktionszustand ist das Fenster 22 unbeschädigt und erfüllt die Anforderungen an die Funktionsfähigkeit. Figur 5 zeigt die Anordnung der Prüfelemente 32 mit dem Fenster 22 in einem beispielhaften Ist-Funktionszustand, in dem das außenliegende Prüfelement 32 und das Fenster 22 an der Außenseite beschädigt sind. In diesem Ist-Funktionszustand erfüllt das Fenster 22 nicht die Anforderungen an die Funktionsfähigkeit. Die Beschädigung wirkt sich auf die Wechselwirkung zwischen dem Prüfelementen 32 aus. Das elektrische Feld 44 in dem Ist-Funktionszustand unterscheidet sich von dem elektrischen Feld 44 in dem Referenz-Funktionszustand.

Mit der Prüf-Auswerteeinrichtung 34 kann eine Ist-Zustandsgröße, beispielsweise in Form einer elektrischen Spannung oder einem Frequenzverhalten, ermittelt werden.

Die Ist-Zustandsgröße charakterisiert den Ist-Funktionszustand des Fensters 22. Der Funktionszustand des Fensters 22 kann beispielsweise durch Beschädigungen oder Fehlen von Teilen des Fensters 22 verändert werden. Veränderungen des Funktionszustands des Fensters 22 können beispielsweise tiefe Kratzer in der äußeren Oberfläche, ein Reißen oder Brechen, eine Lochbildung, beispielsweise durch Steinschlag oder dergleichen, oder ein vollständiges oder teilweises Fehlen des Fensters 22 bewirkt werden. Da die Prüfelemente 32 direkt an dem Fenster 22 angeordnet und mit diesem verbunden sind, wirken sich Veränderungen des Funktionszustands des Fensters 22 auch auf die Wechselwirkung zwischen den Prüfelementen 32 aus. Dadurch verändert sich das elektrische Feld 44 zwischen den Prüfelementen 32 und die entsprechende Ist-Zustandsgröße.

Die Prüf-Auswerteeinrichtung 34 weist Mittel auf, mit denen die Ist-Zustandsgröße mit einer Referenz-Zustandsgröße verglichen werden kann. Die Referenz-Zustandsgröße charakterisiert den Referenz-Funktionszustand der Prüfelemente 32 und des Fensters 22, wie dieser beispielhaft in Figur 4 gezeigt ist.

Beispielsweise kann der Vergleich der Ist-Zustandsgröße mit der Referenz-Zustandsgröße mithilfe von Schwellwert-Vergleichen erfolgen.

Die Referenz-Zustandsgrößen sind beispielsweise in einem Speichermedium vorgegeben. Das Speichermedium kann beispielsweise Teil der der Prüf-Auswerteeinrichtung 34 sein. Die Referenz-Zustandsgrößen charakterisieren den Referenz-Funktionszustand des Fensters 22.

Die Referenz-Zustandsgrößen können beispielsweise bei einer Kalibrierung des LiDAR-Systems 12, beispielsweise am Ende einer Produktionslinie, ermittelt werden. Abweichungen vom Referenzzustand des Fensters 22, beispielsweise durch Beschädigungen oder durch Fehlen zumindest von Teilen des Fensters 22, können dazu führen, dass Abtastsignale 38 unkontrolliert in die Umgebung gelangen. Unkontrolliert austretende Abtastsignale 38 können beispielsweise zu Gesundheitsschäden, insbesondere Augenschädigungen, bei angestrahlten Personen führen. Um die erforderliche Augensicherheit zu gewährleisten, müssen daher Abtastsignale 38, welche unkontrolliert in die Umgebung gelangen, verhindert werden.

Wird bei dem Vergleich eine Abweichung der Ist-Zustandsgröße von der Referenz-Zustandsgröße unter Berücksichtigung einer Toleranz, welche auch Null sein kann, festgestellt, wie dies bei dem in der Figur 5 gezeigten Ist-Zustand der Fall ist, so wird mit der Einrichtung 30 ein Warnsignal erzeugt. Auf das Warnsignal hin wird die Aussendung von weiteren Abtastsignalen 38 gestoppt.

Mit der Prüfeinrichtung 30 kann der Funktionszustand des Fensters 22 während des Betriebs des LiDAR-Systems 12 und/oder während Betriebspausen berührungslos geprüft werden.

In der Figur 6 ist ein Fenster 22 eines LiDAR-Systems 12 mit Prüfelementen 132 gemäß einem zweiten Ausführungsbeispiel gezeigt. Diejenigen Elemente, die zu denen des Ausführungsbeispiels aus den Figuren 2 bis 5 ähnlich sind, sind mit denselben Bezugszeichen versehen. Das zweite Ausführungsbeispiel unterscheidet sich von dem ersten Ausführungsbeispiel dadurch, dass die Prüfelemente 132 in Form von Gittern realisiert sind. Zwischen den Materialbereichen der Prüfelemente 132 sind Lücken realisiert, durch welche die Abtastsignale 38 und die Echo-Abtastsignale 40 hindurchgelangen können.

In der Figur 7 ist ein Fenster 22 eines LiDAR-Systems 12 mit Prüfelementen 232 gemäß einem dritten Ausführungsbeispiel gezeigt. Im Unterschied zu dem ersten Ausführungsbeispiel sind die Prüfelemente 232 beim dritten Ausführungsbeispiel an gegenüberliegenden schmalen Seiten des Fensters 22 angeordnet, welche außerhalb des Transmissionsbereichs des Fensters 22 liegen.

## Patentansprüche

1. Detektionsvorrichtung (12) zur Überwachung wenigstens eines Überwachungsbereichs (14) mittels Abtastsignalen (38, 40),
mit wenigstens einer Sendeeinrichtung (24) zum Senden von Abtastsignalen (38) und mit wenigstens einer Prüfeinrichtung (30) zur Prüfung eines Funktionszustands wenigstens eines zu prüfenden Bauteils (22) der Detektionsvorrichtung (12), welches bei einem Betrieb der Detektionsvorrichtung (12) Abtastsignalen (38, 40) ausgesetzt ist, und zur Erzeugung wenigstens eines Warnsignals bei einer Abweichung eines Ist-Funktionszustands des zu prüfenden Bauteils (22) von einem Referenz-Funktionszustand,
wobei die wenigstens eine Prüfeinrichtung (30) wenigstens zwei Prüfelemente (32; 132; 232) aufweist, zwischen denen wenigstens ein Teil des wenigstens einen zu prüfenden Bauteils (22) angeordnet ist,
wobei die wenigstens zwei Prüfelemente (32; 132; 232) jeweils mit wenigstens einem Prüf-Auswertemittel (34) elektrisch verbunden sind,
und wobei die Detektionsvorrichtung (12) wenigstens ein Mittel aufweist, mit dem bei einer Abweichung wenigstens einer Ist-Zustandsgröße von wenigstens einer vorgegebenen Referenz-Zustandsgröße, welche einen Referenz-Funktionszustand des wenigstens einen zu prüfenden Bauteils (22) charakterisiert, unter Berücksichtigung einer Toleranz wenigstens ein Warnsignal erzeugt werden kann.
**dadurch gekennzeichnet, dass** die wenigstens zwei Prüfelemente (32; 132; 232) elektrisch-leitfähig ausgebildet und nicht elektrisch leitfähig miteinander verbunden sind, wobei mit dem Prüf-Auswertemittel (34) wenigstens ein elektrisches Prüfsignal an die wenigstens zwei Prüfelemente (32; 132; 232) angelegt werden kann und die wenigstens eine Ist-Zustandsgröße, welche einen Ist-Funktionszustand des wenigstens einen zu prüfenden Bauteils (22) charakterisiert, aus wenigstens einer elektrischen Wechselwirkung zwischen den wenigstens zwei Prüfelementen (32; 132; 232) ermittelt werden kann, wobei sich als Wechselwirkung zwischen den wenigstens zwei Prüfelementen (32; 132; 232) ein elektrisches Feld ausbildet.

2. Detektionsvorrichtung nach Anspruch 1, **dadurch gekennzeichnet, dass** die Detektionsvorrichtung (12) wenigstens ein elektrisches Prüfsignal-Erzeugungsmittel (35) aufweist.

3. Detektionsvorrichtung nach Anspruch 1 oder 2, **dadurch gekennzeichnet, dass** wenigstens der Teil wenigstens eines zu prüfenden Bauteils (22), welcher sich zwischen den wenigstens zwei elektrisch leitfähigen Prüfelemente (32; 132; 232) befindet, elektrisch nicht leitfähig ist.

4. Detektionsvorrichtung nach einem der vorigen Ansprüche, **dadurch gekennzeichnet, dass** die Detektionsvorrichtung (12) wenigstens ein Gehäuse (20) aufweist, in dem wenigstens eine Sendeeinrichtung (24) und/oder wenigstens eine Empfangseinrichtung (26) und/oder wenigstens ein Teil (34) wenigstens einer Prüfeinrichtung (30) angeordnet ist, und/oder wenigstens ein Gehäuse (20) der Detektionsvorrichtung (12) wenigstens einen Transmissions-Gehäuseabschnitt (22) zur Transmission von Abtastsignalen (38, 40) aufweist.

5. Detektionsvorrichtung nach einem der vorigen Ansprüche, **dadurch gekennzeichnet, dass** wenigstens ein zu prüfendes Bauteil ein Gehäuseabschnitt (22) und/oder ein Transmissions-Gehäuseabschnitt (22) eines Gehäuses (20) und/oder ein optisches Bauteil ist.

6. Detektionsvorrichtung nach einem der vorigen Ansprüche, **dadurch gekennzeichnet, dass** wenigstens eine Anordnung mit wenigstens zwei elektrisch leitfähigen Prüfelementen (32; 132; 232) und einem dazwischen liegenden Teil wenigstens eines zu prüfenden Bauteils (22) wenigstens teilweise für Abtastsignale (38, 40) durchlässig ist.

7. Detektionsvorrichtung nach einem der vorigen Ansprüche, **dadurch gekennzeichnet, dass** wenigstens ein elektrisch leitfähiges Prüfelement (32; 132; 232) aus einem für Abtastsignale (38, 40) durchlässigen Material ist und/oder Lücken aufweist, durch welche Abtastsignale (38, 40) hindurchgelangen können.

8. Detektionsvorrichtung nach einem der vorigen Ansprüche, **dadurch gekennzeichnet, dass** wenigstens ein elektrisch leitfähiges Prüfelement (32; 132; 232) Abtastsignale (38, 40) beeinflussende Eigenschaften aufweist.

9. Detektionsvorrichtung nach einem der vorigen Ansprüche, **dadurch gekennzeichnet, dass** wenigstens ein elektrisch leitfähiges Prüfelement (32; 132) an einer breiten Seite wenigstens eines zu prüfenden Bauteils (22) angeordnet ist
und/oder
wenigstens ein elektrisch leitfähiges Prüfelementen (32; 132) an einer Seite wenigstens eines zu prüfenden Bauteils (22) angeordnet ist, welches beim Betrieb der Detektionsvorrichtung (12) Abtastsignalen (38, 40) ausgesetzt ist,
und/oder
wenigstens ein elektrisch leitfähiges Prüfelement (232) an einer schmalen Seite wenigstens eines zu prüfenden Bauteils (22) angeordnet ist
und/oder
wenigstens ein elektrisch leitfähiges Prüfelementen (232) an einer Seite wenigstens eines zu prüfenden Bauteils (22) angeordnet ist, welches beim Betrieb der Detektionsvorrichtung (12) Abtastsignalen (38, 40) nicht ausgesetzt ist.

10. Detektionsvorrichtung nach einem der vorigen Ansprüche, **dadurch gekennzeichnet, dass** wenigstens ein elektrisch leitfähiges Prüfelement (32; 132; 232) mechanisch kraftübertragend mit dem wenigstens einen zu prüfenden Bauteil (22) verbunden ist.

11. Detektionsvorrichtung nach einem der vorigen Ansprüche, **dadurch gekennzeichnet, dass** wenigstens ein elektrisch leitfähiges Prüfelement (32; 132; 232) als elektrisch leitende Beschichtung auf einer Oberfläche des wenigstens einen zu prüfenden Bauteils (22) realisiert ist.

12. Detektionsvorrichtung nach einem der vorigen Ansprüche, **dadurch gekennzeichnet, dass** wenigstens ein elektrisch leitfähiges Prüfelement (32; 132) an einer dem wenigstens einen zu prüfenden Bauteil (22) abgewandten Außenseite mit einer Schutzschicht (42) versehen ist.

13. Detektionsvorrichtung nach einem der vorigen Ansprüche, **dadurch gekennzeichnet, dass** wenigstens eine Sendeeinrichtung (24) zur Aussendung von elektromagnetischen Abtastsignalen (38) ausgestaltet ist
und/oder
die Detektionsvorrichtung (12) wenigstens eine Empfangseinrichtung (26) aufweist.

14. Fahrzeug (10) mit wenigstens einer Detektionsvorrichtung (12) gemäß Anspruch1.

15. Verfahren zum Betreiben einer Prüfeinrichtung (30) einer Detektionsvorrichtung (12), wobei die Detektionsvorrichtung (12) zur Überwachung wenigstens eines Überwachungsbereichs (14) mittels Abtastsignalen (38, 40) vorgesehen ist, wobei bei dem Verfahren ein Funktionszustand wenigstens eines zu prüfenden Bauteils (22) der Detektionsvorrichtung (12), welches bei einem Betrieb der Detektionsvorrichtung (12) Abtastsignalen (38, 40) ausgesetzt wird, geprüft wird und bei Erkennen eines von einem Referenz-Funktionszustand des wenigstens einen zu prüfenden Bauteils (22) abweichenden Ist-Funktionszustand wenigstens ein Warnsignal erzeugt wird, und wobei bei einer Abweichung wenigstens einer Ist-Zustandsgröße von wenigstens einer vorgegebenen Referenz-Zustandsgröße, welche einen Referenz-Funktionszustand des wenigstens einen zu prüfenden Bauteils (22) charakterisiert, unter Berücksichtigung einer Toleranz wenigstens ein Warnsignal erzeugt wird,
**dadurch gekennzeichnet, dass**
wenigstens ein elektrisches Prüfsignal an wenigstens zwei elektrisch leitfähige Prüfelemente (32; 132; 232) angelegt wird, zwischen denen wenigstens ein Teil des wenigstens einen zu prüfenden Bauteils (22) angeordnet ist,
die wenigstens eine Ist-Zustandsgröße, welche einen Ist-Funktionszustand des wenigstens einen zu prüfenden Bauteils (22) charakterisiert, aus wenigstens einer elektrischen Wechselwirkung zwischen den wenigstens zwei Prüfelementen (32; 132; 232) ermittelt wird, wobei sich als Wechselwirkung zwischen den wenigstens zwei Prüfelementen (32; 132; 232) ein elektrisches Feld ausbildet.

## Claims

1. Detection device (12) for monitoring at least one monitoring region (14) by means of scanning signals (38, 40),
having at least one transmission apparatus (24) for transmitting scanning signals (38) and having at least one test apparatus (30) for testing a functional state of at least one component (22) to be tested of the detection device (12), which component is exposed to scanning signals (38, 40) during operation of the detection device (12), and for generating at least one warning signal in the event of a deviation between an actual functional state of the component (22) to be tested and a reference functional state,
wherein the at least one test apparatus (30) has at least two test elements (32; 132; 232), between which at least a part of the at least one component (22) to be tested is arranged,
wherein the at least two test elements (32; 132; 232) are each electrically connected to at least one test evaluation means (34),
and wherein the detection device (12) has at least one means with which at least one warning signal can be generated if at least one actual state variable deviates from at least one predefined reference state variable, which characterizes a reference functional state of the at least one component (22) to be tested, taking into account a tolerance,
**characterized in that** the at least two test elements (32; 132; 232) are electrically conductive and are connected to one another in a non-electrically conductive manner, wherein the test evaluation means (34) can be used to apply at least one electrical test signal to the at least two test elements (32; 132; 232) and the at least one actual state variable, which characterizes an actual functional state of the at least one component (22) to be tested, can be determined from at least one electrical interaction between the at least two test elements (32; 132; 232), wherein an electrical field is formed as the interaction between the at least two test elements (32; 132; 232).

2. Detection device according to Claim 1, **characterized in that** the detection device (12) comprises at least one electrical test signal generation means (35).

3. Detection device according to Claim 1 or 2, **characterized in that** at least the part of at least one component (22) to be tested that is located between the at least two electrically conductive test elements (32; 132; 232) is electrically non-conductive.

4. Detection device according to any one of the preceding claims, **characterized in that** the detection device (12) has at least one housing (20), in which at least one transmission apparatus (24) and/or at least one reception apparatus (26) and/or at least a part (34) of at least one test apparatus (30) is arranged, and/or at least one housing (20) of the detection device (12) has at least one transmission housing portion (22) for the transmission of scanning signals (38, 40).

5. Detection device according to any one of the preceding claims, **characterized in that** at least one component to be tested is a housing portion (22) and/or a transmission housing portion (22) of a housing (20) and/or an optical component.

6. Detection device according to any one of the preceding claims, **characterized in that** at least one arrangement having at least two electrically conductive test elements (32; 132; 232) and an intermediate part of at least one component (22) to be tested is at least partially permeable for scanning signals (38, 40).

7. Detection device according to any one of the preceding claims, **characterized in that** at least one electrically conductive test element (32; 132; 232) is made of a material permeable for scanning signals (38, 40) and/or has gaps through which scanning signals (38, 40) can pass.

8. Detection device according to any one of the preceding claims, **characterized in that** at least one electrically conductive test element (32; 132; 232) has properties that influence scanning signals (38, 40).

9. Detection device according to any one of the preceding claims, **characterized in that** at least one electrically conductive test element (32; 132) is arranged on a wide side of at least one component (22) to be tested
and/or
at least one electrically conductive test element (32; 132) is arranged on one side of at least one component (22) to be tested that is exposed to scanning signals (38, 40) during operation of the detection device (12),
and/or
at least one electrically conductive test element (232) is arranged on a narrow side of at least one component (22) to be tested
and/or
at least one electrically conductive test element (232) is arranged on one side of at least one component (22) to be tested that is not exposed to scanning signals (38, 40) during operation of the detection device (12),

10. Detection device according to any one of the preceding claims, **characterized in that** at least one electrically conductive test element (32; 132; 232) is mechanically connected to the at least one component (22) to be tested in a force-transmitting manner.

11. Detection device according to any one of the preceding claims, **characterized in that** at least one electrically conductive test element (32; 132; 232) is implemented as an electrically conductive coating on a surface of the at least one component (22) to be tested.

12. Detection device according to any one of the preceding claims, **characterized in that** at least one electrically conductive test element (32; 132) is provided with a protective layer (42) on an outer side that faces away from the at least one component (22) to be tested.

13. Detection device according to any one of the preceding claims, **characterized in that** at least one transmission apparatus (24) is designed to send electromagnetic scanning signals (38)
and/or
the detection device (12) has at least one reception apparatus (26).

14. Vehicle (10) having at least one detection device (12) according to Claim 1.

15. Method for operating a test apparatus (30) of a detection device (12), wherein the detection device (12) is provided for monitoring at least one monitoring region (14) by means of scanning signals (38, 40), wherein, in the method, a functional state of at least one component (22) to be tested of the detection device (12), which, during operation of the detection device (12), is exposed to scanning signals (38, 40), is tested and a warning signal is generated if it is identified that an actual functional state deviates from a reference functional state of the at least one component (22) to be tested and wherein at least one warning signal is generated if at least one actual state variable deviates from at least one predefined reference state variable, which characterizes a reference functional state of the at least one component (22) to be tested, taking into account a tolerance,
**characterized in that**
at least one electrical test signal is applied to at least two electrically conductive test elements (32; 132; 232), between which at least a part of the at least one component (22) to be tested is arranged,
the at least one actual state variable, which characterizes an actual functional state of the at least one component (22) to be tested, is determined from at least one electrical interaction between the at least two test elements (32; 132; 232), wherein an electrical field is formed as the interaction between the at least two test elements (32; 132; 232).

## Revendications

1. Dispositif de détection (12) pour surveiller au moins une région de surveillance (14) à l'aide de signaux de balayage (38, 40),
comprenant au moins un dispositif de transmission (24) pour transmettre des signaux de balayage (38) et au moins un dispositif de test (30) pour tester un état fonctionnel d'au moins un composant (22) à tester du dispositif de détection (12), lequel est exposé à des signaux de balayage (38, 40) pendant un fonctionnement du dispositif de détection (12), et pour générer au moins un signal d'avertissement en cas d'écart d'un état fonctionnel réel du composant (22) à tester par rapport à un état fonctionnel de référence,
dans lequel ledit au moins un dispositif de test (30) comporte au moins deux éléments de test (32 ; 132 ; 232), entre lesquels est agencée au moins une partie dudit au moins un composant (22) à tester,
dans lequel lesdits au moins deux éléments de test (32 ; 132 ; 232) sont respectivement connectés électriquement à au moins un moyen d'analyse de test (34),
et dans lequel le dispositif de détection (12) comporte au moins un moyen à l'aide duquel au moins un signal d'avertissement peut être généré en cas d'écart d'au moins une valeur d'état réelle par rapport à au moins une variable d'état de référence prédéfinie, laquelle caractérise un état fonctionnel de référence dudit au moins un composant (22) à tester, en tenant compte d'une tolérance,
**caractérisé en ce que** lesdits au moins deux éléments de test (32 ; 132 ; 232) sont réalisés sous forme électriquement conductrice et sont reliés l'un à l'autre de manière non électriquement conductrice, un signal de test électrique pouvant être appliqué auxdits au moins deux éléments de test (32 ; 132 ; 232) par le moyen d'analyse de test (34) et ladite au moins une valeur réelle d'état, qui caractérise un état fonctionnel réel dudit au moins un composant (22) à tester, pouvant être déterminée à partir d'au moins une interaction électrique entre lesdits au moins deux éléments de test (32 ; 132 ; 232), un champ électrique étant produit en tant qu'interaction entre lesdits au moins deux éléments de test (32 ; 132 ; 232).

2. Dispositif de détection selon la revendication 1, **caractérisé en ce que** le dispositif de détection (12) comporte au moins un moyen de génération de signal de test électrique (35).

3. Dispositif de détection selon la revendication 1 ou 2, **caractérisé en ce qu'**au moins la partie dudit au moins un composant (22) à tester, qui se trouve entre lesdits au moins deux éléments de test (32 ; 132 ; 232) électriquement conducteurs, est non électriquement conductrice.

4. Dispositif de détection selon l'une des revendications précédentes, **caractérisé en ce que** le dispositif de détection (12) comporte au moins un boîtier (20) dans lequel est agencé(e) au moins un dispositif de transmission (24) et/ou au moins un dispositif de réception (26) et/ou au moins une partie (34) d'au moins un dispositif de test (30), et/ou au moins un boîtier (20) du dispositif de détection (12) comporte au moins une partie de boîtier de transmission (22) pour la transmission de signaux de balayage (38, 40).

5. Dispositif de détection selon l'une des revendications précédentes, **caractérisé en ce qu'**au moins un composant à tester est une partie de boîtier (22) et/ou une partie de boîtier de transmission (22) d'un boîtier (20) et/ou un composant optique.

6. Dispositif de détection selon l'une des revendications précédentes, **caractérisé en ce qu'**au moins un agencement comprenant au moins deux éléments de test (32 ; 132 ; 232) électriquement conducteurs et une partie intermédiaire dudit au moins un composant (22) à tester est au moins partiellement transparente aux signaux de balayage (38, 40).

7. Dispositif de détection selon l'une des revendications précédentes, **caractérisé en ce qu'**au moins un élément de test (32 ; 132 ; 232) électriquement conducteur est constitué d'un matériau transparent aux signaux de balayage (38, 40) et/ou présente des espaces à travers lesquels les signaux de balayage (38, 40) peuvent passer.

8. Dispositif de détection selon l'une des revendications précédentes, **caractérisé en ce qu'**au moins un élément de test (32 ; 132 ; 232) électriquement conducteur présente des propriétés influençant les signaux de balayage (38, 40).

9. Dispositif de détection selon l'une des revendications précédentes, **caractérisé en ce qu'**au moins un élément de test (32 ; 132) électriquement conducteur est agencé sur un côté large d'au moins un composant (22) à tester
et/ou
au moins un élément de test (32 ; 132) électriquement conducteur est agencé sur un côté d'au moins un composant (22) à tester, lequel est exposé à des signaux de balayage (38, 40) pendant le fonctionnement du dispositif de détection (12),
et/ou
au moins un élément de test (232) électriquement conducteur est agencé sur un côté étroit d'au moins un composant (22) à tester
et/ou
au moins un élément de test (232) électriquement conducteur est agencé sur un côté d'au moins un composant (22) à tester, lequel n'est pas exposé à des signaux de balayage (38, 40) pendant le fonctionnement du dispositif de détection (12).

10. Dispositif de détection selon l'une des revendications précédentes, **caractérisé en ce qu'**au moins un élément de test (32 ; 132 ; 232) électriquement conducteur est relié audit au moins un composant (22) à tester par transmission de force mécanique.

11. Dispositif de détection selon l'une des revendications précédentes, **caractérisé en ce qu'**au moins un élément de test (32 ; 132 ; 232) électriquement conducteur est réalisé sous forme de revêtement électriquement conducteur sur une surface dudit au moins un composant (22) à tester.

12. Dispositif de détection selon l'une des revendications précédentes, **caractérisé en ce qu'**au moins un élément de test (32 ; 132) électriquement conducteur est pourvu d'une couche de protection (42) sur un côté extérieur tourné à l'opposé dudit au moins un composant (22) à tester.

13. Dispositif de détection selon l'une des revendications précédentes, **caractérisé en ce qu'**au moins un dispositif de transmission (24) est configuré pour l'émission de signaux de balayage électromagnétiques (38) et/ou
le dispositif de détection (12) comporte au moins un dispositif de réception (26).

14. Véhicule (10) comprenant au moins un dispositif de détection (12) selon la revendication 1.

15. Procédé pour faire fonctionner un dispositif de test (30) d'un dispositif de détection (12), le dispositif de détection (12) étant prévu pour surveiller au moins une région de surveillance (14) au moyen de signaux de balayage (38, 40), dans lequel, selon le procédé, on teste un état fonctionnel d'au moins un composant (22) à tester du dispositif de détection (12), lequel est exposé à des signaux de balayage (38, 40) pendant un fonctionnement du dispositif de détection (12), et en cas de détection d'un état fonctionnel réel s'écartant d'un état fonctionnel de référence dudit au moins un composant (22) à tester, au moins un signal d'avertissement est généré, et dans lequel au moins un signal d'avertissement est généré en cas d'écart d'au moins une valeur réelle d'état par rapport à au moins une variable d'état de référence prédéfinie, laquelle caractérise un état fonctionnel de référence dudit au moins un composant (22) à tester, en tenant compte d'une tolérance,
**caractérisé en ce que**
au moins un signal de test électrique est appliqué à au moins deux éléments de test (32 ; 132 ; 232) électriquement conducteurs, entre lesquels est agencée au moins une partie dudit au moins un composant (22) à tester,
ladite au moins une valeur réelle d'état, qui caractérise un état fonctionnel réel dudit au moins un composant (22) à tester, est déterminée à partir d'au moins une interaction électrique entre lesdits au moins deux éléments de test (32 ; 132 ; 232), un champ électrique étant produit en tant qu'interaction entre lesdits au moins deux éléments de test (32 ; 132 ; 232).
